# EUROPEAN PATENT APPLICATION

(11) **EP 4 795 935 A1**
(43) Date of publication of application: **26.08.2026**
(21) Application number: 24879695.5
(22) Date of filing: 15.10.2024
(51) Int. Cl.: A01N 43/50, A01C 1/00, A01N 25/00, A01P 21/00

(54) **PLANT TREATMENT METHOD, PREPARATION, PLANT PROPAGULE, PLANT RAISING METHOD, AND TRANSPLANTED SEEDLING**

(30) Priority: 16.10.2023 JP 2023178169
(71) Applicant: Kureha Corporation, Chuo-ku Tokyo 103-8552 (JP)
(72) Inventor: KOSHIYAMA, Tatsuyuki, Tokyo 103-8552 (JP); HIGASHIYAMA, Yukihiro, Tokyo 103-8552 (JP); JIMBO, Yusuke, Tokyo 103-8552 (JP); TETSU, Naoki, Tokyo 103-8552 (JP)
(74) Representative: Hoefer & Partner Patentanwälte mbB
(86) International application number: PCT/JP2024/036625
(87) International publication number: WO 2025/084271

(57) **Abstract**

To provide a method for plant treatment, which is capable of further promoting growth of a plant by using a compound such as ergothioneine. A plant treatment method of the present invention includes treating a propagule of a plant with an active component which is a compound represented by Formula (I) below or a tautomer thereof, or an agronomically acceptable salt thereof: 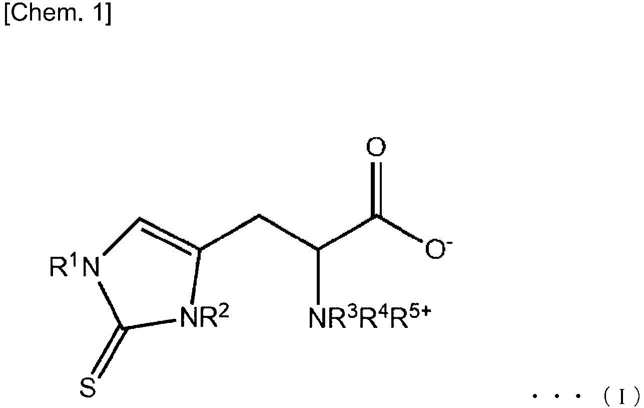 where in Formula (I), R¹ and R² each independently represent a hydrogen atom or an alkyl group having from 1 to 4 carbons, and R³, R⁴, and R⁵ each independently represent an alkyl group having from 1 to 4 carbons.

## Description

### [TECHNICAL FIELD]

The present invention relates to a plant treatment method, a formulation, a propagule of a plant, a method for growing a plant, and a transplanted seedling.

### [BACKGROUND ART]

A method for alleviating abiotic stress and a method for promoting plant growth and increasing a crop yield by application of an agent have been studied. For example, Patent Document 1 describes that glycine betaine has an action of alleviating abiotic stress, such as insufficient watering, on plants.

Patent Document 2 describes that application of an aqueous solution of ergothioneine to a sprouted plant body increases the plant height, the number of flowers and fruits, and the yield of seeds.

### [CITATION LIST]

### [PATENT DOCUMENT]

Patent Document 1: WO 96/014749
Patent Document 2: WO 2021/005970

### [SUMMARY OF INVENTION]

### [TECHNICAL PROBLEM]

It is considered that abiotic stress greatly inhibits expression of potential productivity of plants. Thus, it is expected that the production amount of plants will be dramatically increased by applying a biostimulant for removing abiotic stress.

Compounds such as ergothioneine described in Patent Document 2 have such effects as increases in production amount, plant height, and numbers of seeds, flowers, and fruits. These compounds are thus considered to be promising active components for plants. On the other hand, it is also required to find a treatment method by which growth of plants can be further promoted by these compounds to obtain an effect of further improving the production amount.

The present invention has been made in view of the above problems, and is directed to providing a plant treatment method, a formulation used in the method, a propagule of a plant treated by the method, a method for growing a plant from the propagule, and a transplanted seedling grown from the propagule, each of which can further promote the growth of the plant by using a compound such as ergothioneine.

### [SOLUTION TO PROBLEM]

One embodiment of the present invention for solving the above-described problems relates to a plant treatment method, a formulation, a propagule of a plant, a method for growing a plant, and a transplanted seedling as described in [1] to [9] below.
[1] A treatment method, including treating a propagule of a plant with an active component which is a compound represented by Formula (I) below or a tautomer thereof, or an agronomically acceptable salt thereof: 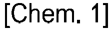 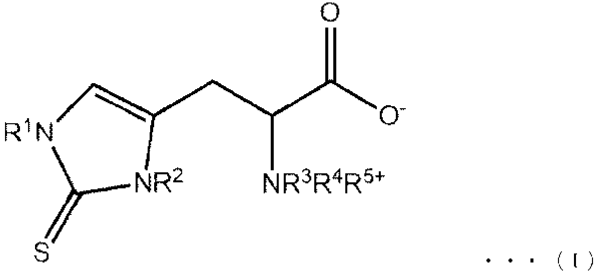 where in Formula (I), R¹ and R² each independently represent a hydrogen atom or an alkyl group having from 1 to 4 carbons, and R³, R⁴, and R⁵ each independently represent an alkyl group having from 1 to 4 carbons.
[2] The plant treatment method according to [1], wherein
   the active component is a growth promoter.
[3] The plant treatment method according to [1] or [2], wherein
   an amount of the active component applied is 0.005 µg or more and 10 mg or less per 0.1 g of the propagule.
[4] The plant treatment method according to any of [1] to [3], wherein
   in the treatment, the propagule is brought into contact with a treatment agent containing the active component.
[5] The plant treatment method according to any of [1] to [4], wherein
   the treatment is performed before plant cultivation is started.
[6] A formulation for plant propagule treatment , the formulation containing:
   a liquid carrier; and
   an active component which is a compound represented by Formula (I) below or a tautomer thereof, or an agronomically acceptable salt thereof: 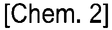 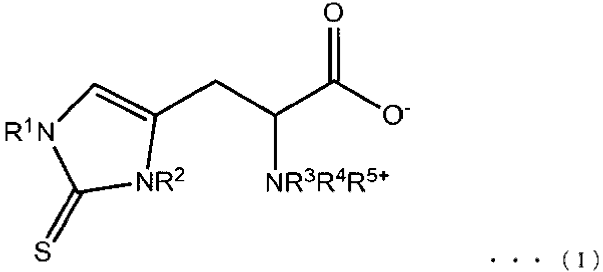
   where in Formula (I), R¹ and R² each independently represent a hydrogen atom or an alkyl group having from 1 to 4 carbons, and R³, R⁴, and R⁵ each independently represent an alkyl group having from 1 to 4 carbons.
[7] The formulation for plant propagule treatment according to [6], wherein the active component is a growth promoter.
[8] A propagule of a plant, the propagule containing an active component which is a compound represented by Formula (I) below or a tautomer thereof, or an agronomically acceptable salt thereof: 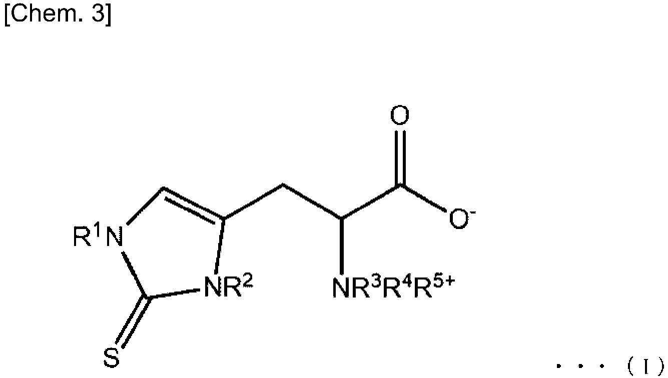 where in Formula (I), R¹ and R² each independently represent a hydrogen atom or an alkyl group having from 1 to 4 carbons, and R³, R⁴, and R⁵ each independently represent an alkyl group having from 1 to 4 carbons.
[9] The propagule of a plant according to [8], wherein
   the active component is a growth promoter.
[10] The propagule of a plant according to [8] or [9], wherein
   the active component is deposited onto a surface of the propagule.
[11] A method for growing a plant, the method including
   sprouting a propagule of a plant, wherein
   the propagule contains an active component which is a compound represented by Formula (I) below or a tautomer thereof, or an agronomically acceptable salt thereof: 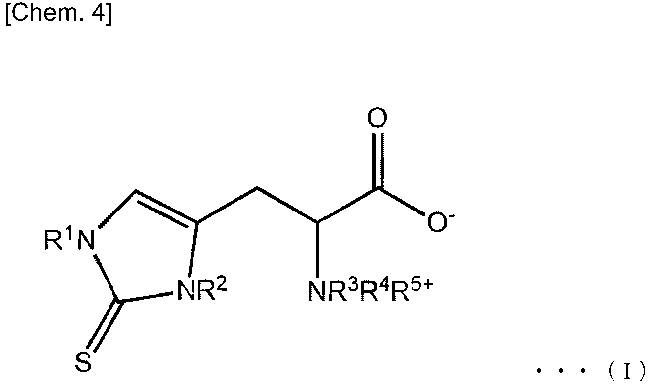
   where in Formula (I), R¹ and R² each independently represent a hydrogen atom or an alkyl group having from 1 to 4 carbons, and R³, R⁴, and R⁵ each independently represent an alkyl group having from 1 to 4 carbons.
[12] The method for growing a plant according to [11], wherein
   the active component is a growth promoter.
[13] The method for growing a plant according to [11] or [12], the method including, prior to the sprouting,
   treating the propagule with the active component.
[14] A transplanted seedling grown by the method described in any of [11] to [13].

### [ADVANTAGEOUS EFFECTS OF INVENTION]

According to the present invention, there are provided a plant treatment method, a formulation used in the method, a propagule of a plant treated by the method, a method for growing a plant from the propagule, and a transplanted seedling grown from the propagule, each of which can further promote the growth of the plant by using a compound such as ergothioneine.

### [DESCRIPTION OF EMBODIMENTS]

### Seed Treatment Method

One embodiment of the present invention relates to a method for treating a seed, the method including treating a seed of a plant with an active component which is a compound represented by Formula (I) below or a tautomer thereof, or an agronomically acceptable salt thereof: 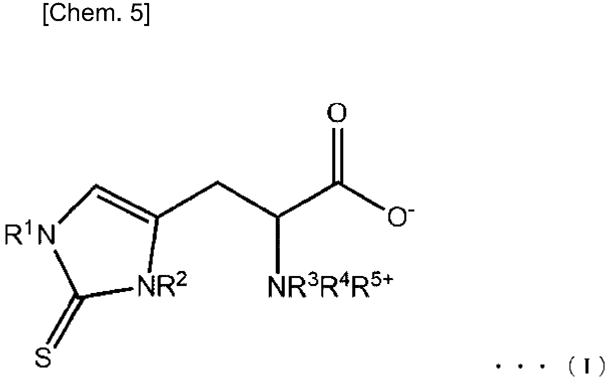 where in Formula (I), R¹ and R² each independently represent a hydrogen atom or an alkyl group having from 1 to 4 carbons, and R³, R⁴, and R⁵ each independently represent an alkyl group having from 1 to 4 carbons.

The alkyl group that can be included in R¹ to R⁵ may be linear or branched. Examples of the alkyl group that can be included in R¹ to R⁵ include a methyl group, an ethyl group, a propyl group, an isopropyl group, a butyl group, an isobutyl group, a sec-butyl group, and a tert-butyl group.

At least one of R¹ or R² is preferably a hydrogen atom, and more preferably both of them are hydrogen atoms. When R¹ and R² are alkyl groups, they are preferably methyl groups, ethyl groups or propyl groups, more preferably methyl groups or ethyl groups, and even more preferably methyl groups.

R³, R⁴, and R⁵ are each preferably independently a methyl group, an ethyl group, or a propyl group, more preferably a methyl group or an ethyl group, and even more preferably a methyl group. At least one of R³, R⁴, or R⁵ is preferably a methyl group, more preferably at least two of them are methyl groups, and even more preferably all of them are methyl groups.

When at least one of R¹ or R² is a hydrogen atom, the compound represented by Formula (I) has a tautomer. More specifically, when R² is a hydrogen atom, the compound represented by Formula (I) has a compound represented by Formula (II) below as a tautomer. When R' is a hydrogen atom, the compound represented by Formula (I) has a compound represented by Formula (III) below as a tautomer. Note that the term "tautomer" as used herein means both the compound represented by Formula (II) and the compound represented by Formula (III). 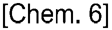 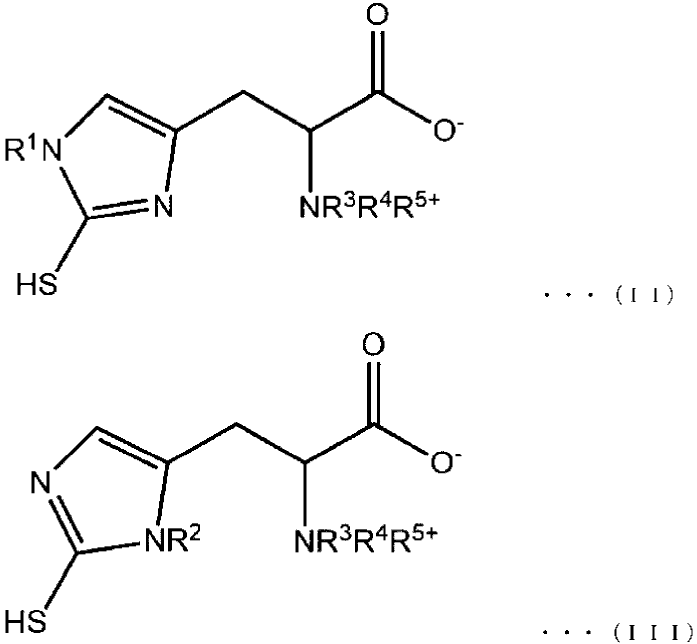 where in Formulas (II) and (III), R¹ to R⁵ are the same as R¹ to R⁵ in Formula (I).

Normally, in a solution, the compound represented by Formula (I) and the compound represented by Formula (II) or (III) can exist in equilibrium. A ratio of the compound represented by Formula (I) to the compound represented by Formula (II) or (III) can vary depending on the solvent, temperature, pH, or the like.

The compound represented by Formula (I) or a tautomer thereof is preferably ergothioneine, and more preferably L-(+)-ergothioneine.

As these compounds, commercially available compounds thereof may be used, or those synthesized by a technique well known to those skilled in the art, for example, a method described in JP 2013-506706 T or JP 2006-160748 A may be used. Ergothioneine is known to be produced by bacteria and fungi. Examples of such a production method using a microorganism include methods described in JP 2012-105618 A, JP 2014-223051 A, WO 2016/104437, WO 2016/121285, WO 2015/168112, and WO 2017/150304. As ergothioneine, a culture containing ergothioneine and obtained from these microorganisms may be used, or ergothioneine obtained by concentrating or purifying the culture may be used.

"Agronomically acceptable" means that it is safe, non-toxic, and not undesired biologically or otherwise, but it is acceptable as agents for agriculture and horticulture, especially for agents for agriculture and horticulture that improve growth promotion and abiotic stress tolerance of plants.

The "agronomically acceptable salt" of the compound represented by Formula (I) or a tautomer thereof is a salt that is agronomically acceptable as defined above, and means those capable of providing the action and effect of the compound represented by Formula (I) or a tautomer thereof. Examples of such a salt include hydrates, solvates, acid addition salts, a salt formed when an acidic proton (proton acide) present in the compound represented by Formula (I) or a tautomer thereof is substituted with a metal ion, and a salt formed when the acidic proton coordinates with an organic base or an inorganic base.

The acid addition salt may be formed with an inorganic acid or an organic acid. Examples of the inorganic acid include hydrochloric acid, hydrobromic acid, sulfuric acid, nitric acid, and phosphoric acid. Examples of the organic acid include acetic acid, benzenesulfonic acid, benzoic acid, camphorsulfonic acid, citric acid, ethanesulfonic acid, fumaric acid, glucoheptonic acid, gluconic acid, glutamic acid, glycolic acid, hydroxynaphthoic acid, 2-hydroxyethanesulfonic acid, lactic acid, maleic acid, malic acid, mandelic acid, methanesulfonic acid, muconic acid, 2-naphthalenesulfonic acid, propionic acid, salicylic acid, succinic acid, dibenzoyl-L-tartaric acid, tartaric acid, p-toluenesulfonic acid, trimethylacetic acid, and trifluoroacetic acid.

Examples of the metal ion capable of substituting the acidic proton present in the compound represented by Formula (I) or a tautomer thereof include an alkali metal ion, an alkaline earth metal ion, and an aluminum ion.

Examples of the organic base capable of coordinating with the acidic proton present in the compound represented by Formula (I) or a tautomer thereof include diethanolamine, ethanolamine, N-methylglucamine, triethanolamine, and tromethamine. Examples of the inorganic base capable of coordinating with the acidic proton present in the compound represented by Formula (I) or a tautomer thereof include aluminum hydroxide, calcium hydroxide, potassium hydroxide, sodium carbonate, and sodium hydroxide.

It is considered that the active component acts as a so-called biostimulant which promotes plant growth and alleviates abiotic stress. As confirmed in examples described below, the active component has an excellent growth promoting effect and is thus useful as a growth promoter.

As the plant treatment method with the active component, spraying onto stems and leaves, introduction into feed water, spraying onto soil, injection into subsoil using an injector, treatment of propagules such as seeds, bulbs, and tubers, and the like are considered. According to new findings of the present inventors, among these treatment methods, the treatment of propagules is excellent in growth promoting effect of plants as compared with the other treatment methods. As used herein, "excellent in growth promoting effect" means that at least one of the plant growth indices is superior over the other treatment methods. Examples of the "plant growth index" here include plant height, aboveground weight, belowground weight, number of tillers, root yield, stem yield, number of leaves, leaf yield, number of flower buds, number of flowers, number of fruits, fruit yield, number of seeds, and seed yield of a plant. Further, in the treatment of a propagule, these effects can be sufficiently obtained even when an amount of the agent is smaller than that of treatment of the other organs.

Note that as used herein, the treatment of a propagule means a treatment in which a treatment agent containing the active component is brought into direct contact with the propagule. The treatment agent is an agent used to treat a propagule. The treatment agent may be the active component itself, a formulation containing the active component in a form distributed in the market may be used as the treatment agent as it is, or a formulation containing the active component may be diluted at the time of treatment as necessary, or a formulation containing the active component may be mixed with another component to prepare the treatment agent. Application of the treatment agent containing the active component to soil or a medium in which a propagule is sown or placed is not included in the treatment of a propagule.

The method for treating a propagule with the active component is not particularly limited. For example, the treatment agent in which the active component is dissolved or dispersed in a liquid carrier may be brought into contact with the propagule. The active component brought into contact may remain on the surface of the propagule or may be absorbed into the propagule. The treatment agent to be brought into contact at that time may be a liquid treatment agent (treatment liquid) or a solid treatment agent. Examples of the treatment method using the liquid treatment agent (treatment liquid) include application of the treatment liquid by a method such as spraying, application of an active component to a propagule by mixing the propagule with the treatment liquid, immersion in the treatment liquid, and a method in which the treatment agent is brought into contact with a propagule by bringing a sponge or cotton cloth containing the treatment liquid into contact with the propagule. Examples of the treatment method using the solid treatment agent include a method in which a powdery treatment agent is sprayed onto a propagule, and a method in which a propagule is powder-coated with a powdery treatment agent. Alternatively, the propagule may be coated with pellets (clay mineral) containing the active component or may be coated with a resin containing the active component. The resin used for the coating may be in a film shape, may be dissolved or dispersed in a solvent, or may be in any other form.

The treatment of the propagule is preferably performed in a state where the above treatment can be performed, for example, in a state where the treatment agent can be sprayed or applied onto the propagule, or the propagule can be immersed in, powder-coated, or coated with the treatment agent. For example, it is preferable to treat the propagule before starting cultivation of the propagule (e.g., before sowing). The propagule may be in a dormant state where growth is stopped, or may be in a non-dormant state where growth is started.

The amount of the active component applied to the propagule is preferably 0.005 µg or more and 10 mg or less, more preferably 0.05 µg or more and 3 mg or less, even more preferably 0.05 µg or more and 0.8 mg or less, and particularly preferably 0.05 µg or more and 0.5 mg or less, per 0.1 g of the propagule. Within the above range, the effects such as promotion of plant growth, increase in production amount, and increase in numbers of seeds, flowers, and fruits can be remarkably exhibited.

The temperature at the treatment (for example, temperature of the treatment agent) is preferably 0°C or higher and 80°C or lower, and more preferably normal temperature.

The treatment time (for example, contact time between the treatment agent and the propagule) is preferably 1 minute or longer and 48 hours or shorter, and more preferably 10 minutes or longer and 36 hours or shorter.

The propagule after treatment is preferably dried to remove the liquid carrier after the treatment with the treatment liquid.

The propagule may be a seed of a seed-propagating plant, a spore of a spore-propagating plant, or a vegetatively propagating organ of a vegetatively propagating plant. Examples of such a vegetatively propagating organ include bulbs (scaly bulbs), tubers, and other vegetatively propagating organs such as bulbils.

These propagules may be derived from any plant. Examples of the plant include: Poaceae such as rice, wheat, barley, rye (triticale), oats, corn, sorghum, sugar cane, turf, bentgrass, bermudagrass, fescue, and ryegrass; Legumes such as soybean, peanut, kidney bean, pea, adzuki bean, and alfalfa; Convolvulaceae such as sweet potato; Solanaceae such as capsicum, sweet pepper, tomato, eggplant, potato, and tobacco; Polygonaceae such as buckwheat; Asteraceae such as sunflower; Araliaceae such as ginseng; Brassicaceae such as rapeseed, broccoli, Chinese cabbage, turnip, cabbage, arugula, Japanese radish, and radish; Chenopodiaceae such as sugar beet; Malvaceae such as cotton; Rubiaceae such as coffee tree; Sterculiaceae such as cacao; Theaceae such as tea; Cucurbitaceae such as watermelon, melon, cucumber, and pumpkin; Liliaceae such as onion, leek, and garlic; Rosaceae such as strawberry, apple, almond, apricot, plum, yellow peach, Japanese plum, peach, and pear; Apiaceae such as carrot; Araceae such as taro; Anacardiaceae such as mango; Bromeliaceae such as pineapple; Caricaceae such as papaya; Ebenaceae such as persimmon; Ericaceae such as blueberry; Juglandaceae such as pecan; Musaceae such as banana; Oleaceae such as olive; Palmae such as coconut and date; Rutaceae such as mandarin orange, orange, grapefruit, and lemon; Vitaceae such as grape; flowers and ornamental plants; trees other than fruit trees; and other ornamental plants.

The plant may be any of wild plants, cultivars, plants and cultivars bred by known hybridization or plasmogamy, and genetically recombined plants and cultivars obtained by gene manipulation. Examples of the genetically recombined plants and cultivars obtained by gene manipulation include herbicide-tolerant crops, pest-resistant crops in which an insecticidal protein-producing gene is recombined, pathogen-resistant crops in which a pathogen resistance derivative-producing gene is recombined, taste-improved crops, yield-improved crops, preservation-improved crops, and yield-improved crops. Examples of the genetically recombined cultivars that have been approved in each country include various cultivars accumulated in the database of the International Service for the Acquisition of Agri-biotech Applications (ISAAA). Specific examples thereof include cultivars under the trade names of: AgriSure, AgriSure 3000GT, AgriSure 3122 E-Z Refuge, AgriSure 3122 Refuge Renew, AgriSure Artesian 3030A, AgriSure Artesian 3011A, AgriSure Duracade, AgriSure Duracade 5222 E-Z Refuge, AgriSure GT, AgriSure GT/CB/LL, AgriSure RW, AgriSure Viptera 3110, AgriSure Viptera 3111, AgriSure Viptera 3220 E-Z Refuge, AgriSure Viptera 3220 Refuge Renew, BiteGard, Bollgard, Bollgard II, Bollgard II/Roundup Ready, Bollgard 3 XtendFlex Cotton, Bollgard Cotton, Bollgard/Roundup Ready Cotton, B.t., B.t/BXN Cotton, B.t. Maize, BtXtra, BXN, BXN Canola, BXN Cotton, Clearfield, DroughtGard, Enlist, Enlist Cotton, Enlist WideStrike 3 Cotton, Genuity, Genuity Bollgard II XtendFlex, Genuity Intacta RR2 Pro, Genuity SmartStax, Genuity SmartStax RIB Complete, Genuity VT Double Pro, Genuity VT Double Pro RIB Complete, Genuity VT Triple Pro, Genuity VT Triple Pro RIB Complete, GlyTol, GlyTol Cotton, Herculex, Herculex 1, Herculex RW, Herculex XTRA, IMI, IMI Canola, InVigor, KnockOut, Liberty Link, Liberty Link Conola, Liberty Link cotton, NatureGard, Newleaf, Nucotn, Optimum, Optimum AcreMax, Optimum AcreMax I, Optimum AcreMax-R, Optimum AcreMax RW, Optimum AcreMax RW-R, Optimum AcreMax Xtra-R, Optimum AcreMax Xtreme-R, Optimum AcreMax Xtreme, Optimum Intrasect, Optimum Intrasect Xtra, Optimum Intrasect Xtreme, Optimum Leptra, Optimum TRIsect, Poast Compatible, Powercore, Powercore Corn, Powercore Corn Refuge Advanced, Protecta, Roundup Ready, Roundup Ready 2, Roundup Ready Conola, Roundup Ready Cotton, Roundup Ready Xtend, Roundup Ready/YieldGard, RR Flex/Bollgard II, SCS, SmartStax, SmartStax Refuge Advanced, StarLink, Twinlink, VipCot, VipCot Cotton, WideStrike, WideStrike 3, YieldGard, YieldGard Corn Borner, YieldGard Rootworm, YieldGard Plus, and YieldGard VT Triple.

The active component can be distributed on the market as a formulation. The active component itself may be used as a formulation, or may be formulated in various forms together with other formulation aids or other active ingredients. The form of the formulation is not particularly limited and may be selected depending on the treatment method. Examples of the form of the formulation include a dustable powder, a granule, a dust-granule mixture, a wettable powder, a water soluble powder, an emulsifiable concentrate, a soluble concentrate, an oil miscible liquid/powder, an aerosol, a microcapsule suspension, a paste, a liniment, a smoke generator, a gas generator, and a ultra-low volume formulation.

Examples of the formulation aid include a carrier, a surfactant, and other formulation aids.

The carrier may be a solid carrier or liquid carrier.

Examples of the solid carrier include various powder carriers and granular carriers including: minerals such as clay, talc, diatomaceous earth, zeolite, montmorillonite, bentonite, kaolinite, kaolin, pyrophyllite, agalmatolite, acid clay, activated clay, attapulgite, attapulgus clay, limestone, calcite, marble, vermiculite, perlite, pumice, silica stone, silica sand, sericite, and porcelain stone; synthetic organic substances such as urea; salts such as calcium carbonate, sodium carbonate, magnesium carbonate, sodium sulfate, ammonium sulfate, potassium chloride, slaked lime, and baking soda; synthetic inorganic substances such as amorphous silica (e.g., white carbon and fumed silica) and titanium dioxide; plant carriers such as wood flour, corn stalk (cob), walnut shell (nut shell), fruit core, rice hull, coconut shell, sawdust, bran, soy flour, powdered cellulose, starch, dextrin, and sugars (e.g., lactose and sucrose); and various polymeric carriers such as crosslinked lignin, cationic gel, gelatin gelated by heat or a polyvalent metal salt, water-soluble polymer gel (e.g., agar), chlorinated polyethylene, chlorinated polypropylene, polyvinyl acetate, polyvinyl chloride, ethylene-vinyl acetate copolymers, and urea-aldehyde resins.

Examples of the liquid carrier include aliphatic solvents such as paraffins (normal paraffin, iso-paraffin, naphthene); aromatic solvents such as xylene, alkylbenzene, alkylnaphthalene, and solvent naphtha; mixed solvents such as kerosene; machine oils such as refined high-boiling point aliphatic hydrocarbons; alcohols such as methanol, ethanol, isopropanol, butanol, and cyclohexanol; polyhydric alcohols such as ethylene glycol, diethylene glycol, propylene glycol, dipropylene glycol, hexylene glycol, polyethylene glycol, and polypropylene glycol; polyhydric alcohol derivatives such as propylene-based glycol ether; ketones such as acetone, acetophenone, cyclohexanone, methylcyclohexanone, and γ-butyrolactone; esters such as fatty acid methyl ester (coconut oil fatty acid methyl ester), ethylhexyl lactate, propylene carbonate, and dibasic acid methyl ester (succinic acid dimethyl ester, glutamic acid dimethyl ester, and adipic acid dimethyl ester); nitrogen-containing solvents such as N-alkylpyrrolidones and acetonitrile; sulfur-containing solvents such as dimethyl sulfoxide; oils and fats such as coconut oil, soybean oil, and rapeseed oil; amide-based solvents such as dimethylformamide, N,N-dimethyloctaneamide, N,N-dimethyldecaneamide, methyl 5-(dimethylamino)-2-methyl-5-oxo-valerate, and N-acylmorpholine-based solvents (e.g., CAS No. 887947-29-7); and water.

As the surfactant, various surfactants such as nonionic surfactants, anionic surfactants, cationic surfactants, amphoteric surfactants, silicone-based surfactants, fluorosurfactants, and biosurfactants can be used.

Examples of the nonionic surfactant include sorbitan fatty acid esters, polyoxyethylene sorbitan fatty acid esters, sucrose fatty acid esters, polyoxyethylene fatty acid esters, polyoxyethylene resin acid esters, polyoxyethylene fatty acid diesters, polyoxyethylene alkyl ethers, polyoxyethylene alkylphenyl ethers, polyoxyethylene dialkyl phenyl ethers, polyoxyethylene alkyl phenyl ether formalin condensates, polyoxyethylene/polyoxypropylene block polymers, alkyl polyoxyethylene/polyoxypropylene block polymer ethers, alkyl phenyl polyoxyethylene/polyoxypropylene block polymer ethers, polyoxyethylene alkylamines, polyoxyethylene fatty acid amides, polyoxyethylene fatty acid bisphenyl ethers, polyoxyethylene benzylphenyl (or phenylphenyl) ethers, polyoxyethylene styrylphenyl (or phenylphenyl) ethers, polyoxyethylene castor oils, polyoxyethylene hydrogenated castor oils, and alkyl glycosides.

Examples of the anionic surfactant include sulfates such as alkyl sulfates, polyoxyethylene alkyl ether sulfates, polyoxyethylene alkylphenyl ether sulfates, polyoxyethylene benzyl (or styryl) phenyl (or phenylphenyl) ether sulfates, and polyoxyethylene/polyoxypropylene block polymer sulfates; sulfonates such as paraffin (alkane) sulfonates, α-olefin sulfonates, dialkyl sulfosuccinates, alkylbenzene sulfonates, mono- or dialkyl naphthalene sulfonates, naphthalene sulfonate-formalin condensates, alkyl diphenyl ether disulfonates, lignin sulfonates, polyoxyethylene alkyl phenyl ether sulfonates, and polyoxyethylene alkyl ether sulfosuccinic acid half esters; carboxylates such as fatty acids, resin acids, polycarboxylic acids, alkyl ether carboxylates, alkenyl succinic acids, N-acylamino acids, and naphthenic acids; and phosphates such as polyoxyethylene alkyl ether phosphates, polyoxyethylene mono- or dialkyl phenyl ether phosphates, polyoxyethylene benzyl (or styryl) phenyl (or phenylphenyl) ether phosphates, polyoxyethylene/polyoxypropylene block polymer phosphates, and alkyl phosphates.

Examples of the cationic surfactant include salts of amines such as alkylamines and alkyl pentamethyl propylene diamine; and salts of ammoniums such as alkyltrimethylammonium, methyl polyoxyethylene alkylammonium, alkyl pyridinium, mono- or di-alkyl methylated ammonium, alkyl dimethyl benzalkonium, and benzethonium (octylphenoxyethoxyethyl dimethylbenzyl ammonium).

Examples of the amphoteric surfactant include dialkyldiamino ethyl betaines, alkyldimethyl benzyl betaines, and lecithins (such as phosphatidylcholine and phosphatidylethanolamine).

Examples of the silicone-based surfactant include trisiloxane ethoxylates.

Examples of the fluorosurfactant include perfluoroalkyl carboxylates, perfluoroalkyl sulfonates, and perfluoroalkyl trimethylammonium salts.

Examples of the biosurfactant include sophorolipids, rhamnolipids, trehalose lipids, mannosyl alditol lipids, cellobiose lipids, glucose lipids, oligosaccharide fatty acid esters, spiculisporic acids, corynomycolic acids, agaricic acids, surfactin, serrawettin, viscosin, lichenysin, arthrofactin, emulsan, and alasan.

Examples of the other formulation aids include inorganic salts used as pH adjusters (e.g., sodium and potassium); water-soluble salts such as common salt; xanthan gum, guar gum, carboxymethyl cellulose, polyvinylpyrrolidone, carboxyvinyl polymers, acrylic polymers, polyvinyl alcohols, starch derivatives, water-soluble polymers (e.g., polysaccharides), alginic acid and salts thereof, which are used as thickeners; metal stearates, sodium tripolyphosphate, and sodium hexametaphosphate, which are used as disintegrating dispersants; benzoic acid and salts thereof, sorbic acid and salts thereof, propionic acid and salts thereof, p-hydroxybenzoic acid, methyl p-hydroxybenzoate, and 1,2-benzothiazolin-3-one, which are used as preservatives; sodium polyphosphate, sodium polyacrylate, sodium lignosulfonate, sodium citrate, sodium gluconate/glucoheptonate, ethylene diamine tetraacetic acid and disodium and ammonium salts thereof, which are used as sequesterants; pigments and dyes used as colorants; fluorine-based defoamers, silicone-based defoamers, and ethylene oxide/propylene oxide copolymers, which are used as defoamers; phenol-based antioxidants, amine-based antioxidants, sulfur-based antioxidants, and phosphoric acid-based antioxidants, which are used as antioxidants; salicylic acid-based UV absorbers and benzophenone-based UV absorbers, which are used as UV absorbers; quicklime and magnesium oxide, which are used as desiccants; and adjuvants and chemical damage reducers and deterioration inhibitors.

Examples of the other active ingredients include active ingredients contained in biostimulants, plant growth regulators, fungicides, insecticides, miticides, nematicides, and herbicides. Note that the above active component can act as a so-called biostimulant which alleviates abiotic stress and promotes the growth of plants, and with the use of another biostimulant or the like in combination, it is also possible to further enhance the resistance to abiotic stress and to further enhance the growth-promoting effect.

Examples of the biostimulants include seaweed extract, corn extract, microalgae, mycorrhizal fungus, humic acid, fulvic acid, oxidized glutathione, L-proline, glycine betaine, 5-aminolevulinic acid, 2-hexenal, trehalose, silicic acid, nicotinic acid, acetic acid, and ethanol.

Examples of the plant growth regulators include aminoethoxyvinylglycine, chlormequat, chlorpropham, cyclanilide, dikegulac, daminozide, ethephon, flurprimidol, flumetralin, forchlorfenuron, gibberellin, mepiquat chloride, methylcyclopropene, benzylaminopurine, paclobutrazol, prohexadione, thidiazuron, tributylphosphorotrithioate, trinexapac-ethyl, uniconazole, sodium 1-naphthaleneacetate, 1-naphthylacetamide, 1-methylcyclopropene, 4-chlorophenoxyacetic acid (4-CPA), ethyl 2-methyl-4-chlorophenoxybutyrate (MCPB), isoprothiolane, indolebutyric acid, ethychlozate, calcium formate, chlormequat, choline, cyanamide, dichlorprop, decyl alcohol, sorbitan trioleate, nicosulfuron, pyraflufen-ethyl, butralin, prohydrojasmon, anisifluprin, and pendimethalin.

Examples of the fungicides include nucleic acids metabolism inhibitors, fungicides acting on cytoskeleton and motor proteins, respiration inhibitors, amino acids and protein synthesis inhibitors, signal transduction inhibitors, lipid synthesis or transport/membrane integrity or function inhibitors, sterol biosynthesis inhibitors, cell wall biosynthesis inhibitors, melanin synthesis inhibitors, host plant defense inducers, chemical multi-site inhibitors, and biopesticides/agrochemicals of biological origin with multiple modes of action.

Specific examples of the nucleic acids metabolism inhibitors include benalaxyl, benalaxyl-M or kiralaxyl, furalaxyl, metalaxyl, metalaxyl-M or mefenoxam, ofurace, oxadixyl, bupirimate, dimethirimol, ethirimol, hymexazole, octhilinone, and oxolinic acid.

Examples of the fungicides acting on cytoskeleton and motor proteins include benomyl, carbendazim, fuberidazole, thiabendazole, thiophanate, thiophanate-methyl, diethofencarb, ethaboxam, pencycuron, zoxamide, fluopicolide, fluopimomide, phenamacril, metrafenone, and pyriofenone.

Examples of the respiration inhibitors include diflumetorim, fenazaquin, tolfenpyrad, benodanil, benzovindiflupyr, bixafen, boscalid, carboxin, fenfuram, flubeneteram, fluindapyr, fluopyram, flutolanil, fluxapyroxad, furametpyr, inpyrfluxam, isofetamid, isoflucypram, isopyrazam, mepronil, oxycarboxin, penflufen, penthiopyrad, pydiflumetofen, pyrapropoyne, pyraziflumid, sedaxane, thifluzamide, azoxystrobin, coumoxystrobin, dimoxystrobin, enestrobin, enoxastrobin, famoxadone, fenamidone, fenaminstrobin, flufenoxystrobin, fluoxastrobin, kresoxim-methyl, mandestrobin, metominostrobin, metyltetraprole, orysastrobin, picoxystrobin, pyraclostrobin, pyrametostrobin, pyraoxystrobin, pyribencarb, triclopyricarb, trifloxystrobin, amisulbrom, cyazofamid, fenpicoxamid, florylpicoxamid, metarylpicoxamid, binapacryl, dinocap, fluazinam, meptyldinocap, fentin acetate, fentin chloride, fentin hydroxide, silthiofam, and ametoctradin.

Examples of the amino acids and protein synthesis inhibitors include cyprodinil, mepanipyrim, pyrimethanil, blasticidin-S, kasugamycin, streptomycin, and oxytetracycline.

Examples of the signal transduction inhibitors include proquinazid, quinoxyfen, fludioxonil, chlozolinate, dimetachlone, fenpiclonil, iprodione, procymidone, and vinclozolin.

Examples of the lipid synthesis or transport/membrane integrity or function inhibitors include edifenphos (EDDP), iprobenfos (IBP), isoprothiolane, pyrazophos, biphenyl, chloroneb, dicloran (CNA), etridiazole, quintozene (PCNB), tecnazene (TCNB), tolclofos-methyl, iodocarb, propamocarb, prothiocarb, extracts of Melaleuca alternifolia (tea tree), plant oil mixtures (eugenol, geraniol, thymol), natamycin (pimaricin), fluoxapiprolin, and oxathiapiprolin.

Examples of the sterol biosynthesis inhibitors include azaconazole, bitertanol, bromuconazole, cyproconazole, difenoconazole, diniconazole, epoxiconazole, etaconazole, fenbuconazole, fluoxytioconazole, fluquinconazole, flusilazole, flutriafol, hexaconazole, imazalil, imibenconazole, ipconazole, ipfentrifluconazole, mefentrifluconazole, metconazole, myclobutanil, oxpoconazole, pefurazoate, penconazole, prochloraz, propiconazole, prothioconazole, simeconazole, tebuconazole, tetraconazole, triadimefon, triadimenol, triflumizole, triticonazole, fenarimol, nuarimol, pyrifenox, pyrisoxazole, triforine, methyl-(2RS)-2-[2-chloro-4-(4-chlorophenoxy)phenyl]-2-hydroxy-3-(1H-1,2,4-triazol-1-yl)propanoate, 1-((1H-1,2,4-triazol-1-yl)methyl)-5-(4-chlorobenzyl)-2-(chloromethyl)-2-methylcyclopentan-1-ol, methyl 2-((1H-1,2,4-triazol-1-yl)methyl)-3-(4-chlorobenzyl)-2-hydroxy-1-methylcyclopentane-1-carboxylate, aldimorph, dodemorph, fenpropimorph, tridemorph, fenpropidin, piperalin, spiroxamine, fenhexamid, fenpyrazamine, pyributicarb, naftifine, and terbinafine.

Examples of the cell wall biosynthesis inhibitors include polyoxin, benthiavalicarb (benthiavalicarb-isopropyl), dimethomorph, flumorph, iprovalicarb, mandipropamid, pyrimorph, and valifenalate.

Examples of the melanin synthesis inhibitors include fthalide, pyroquilon, tricyclazole, carpropamid, diclocymet, fenoxanil, and tolprocarb.

Examples of the host plant defense inducers include acibenzolar-S-methyl, probenazole, tiadinil, isotianil, laminarin, Reynoutria sachalinensis extracts, Bacillus mycoides isolate J, cell wall of Saccharomyces cerevisiae strain LAS117, fosetyl (fosetyl-aluminum, fosetyl potassium, fosetyl sodium), phosphorous acid and salts thereof, and dichlobentiazox.

Examples of the chemical multi-site inhibitors include ferbam, mancozeb, maneb, metiram, propineb, thiuram, zinc thiazole, zineb, ziram, amobam, anilazine, dithianon, dichlofluanid, tolylfluanid, guazatine, iminoctadine acetate, iminoctadine albesilate, copper or various copper salts (e.g., copper oxychloride, copper (II) hydroxide, copper hydroxide sulfate, copper sulfate, organocopper (oxine-copper), copper nonylphenolsulfonate, DBEDC), sulfur, captan, captafol, folpet, chlorothalonil (TPN), quinoxaline (chinomethionat), fluoroimide, and methasulfocarb.

Examples of the biopesticides/agrochemicals of biological origin with multiple modes of action include Bacillus subtilis strain AFS032321, Bacillus amyloliquefaciens strain QST713, Bacillus amyloliquefaciens strain FZB24, Bacillus amyloliquefaciens strain MBI600, Bacillus amyloliquefaciens strain D747, Bacillus amyloliquefaciens strain F727, Clonostachys rosea strain CR-7, Gliocladium catenulatum strain J1446, Pseudomonas chlororaphis strain AFS009, Streptomyces griseoviridis strain K61, Streptomyces lydicus strain WYEC108, Trichoderma atroviride strain I-1237, Trichoderma atroviride strain LU132, Trichoderma atroviride strain SC1, Trichoderma asperellum strain T34, extracts from Swinglea glutinosa, and extracts from the cotyledons of lupine plantlets(BLAD).

Examples of other compounds for use in fungicides include chloroinconazide, seboctylamine, flumetylsulforim, flufenoxadiazam, cyflufenamid, cymoxanil, diclomezine, dipymetitrone, dodine, fenitropan, ferimzone, flusulfamide, flutianil, harpin, inorganic salts (hydrogencarbonates (sodium hydrogencarbonate, potassium hydrogencarbonate), potassium carbonate), ipflufenoquin, KINOPROL, materials of biological origin, machine oils, organic oils, picarbutrazox, pyridachlometyl, quinofumelin, tebufloquin, tecloftalam (bactericides), triazoxide, validamycin, aminopyrifene, and shiitake mycelium mycelia extract.

Examples of the insecticides include acetylcholinesterase (AChE) inhibitors, GABA-gated chloride channel blockers, sodium channel modulators, nicotinic acetylcholine receptor (nAChR) competitive modulators, nicotinic acetylcholine receptor (nAChR) allosteric modulators, glutamate-gated chloride channel (GluCl) allosteric modulators, juvenile hormone mimics, miscellaneous nonspecific (multi-site) inhibitors, chordotonal organ TRPV channel modulators, mite growth inhibitors affecting CHS1, microbial disruptors of insect midgut membranes, inhibitors of mitochondrial ATP synthase, uncouplers of oxidative phosphorylation via disruption of proton gradient, nicotinic acetylcholine receptor (nAChR) channel blockers, inhibitors of chitin biosynthesis affecting CHS1, inhibitors of chitin biosynthesis (type 1), molting disruptors (dipteran), molting hormone (ecdysone) receptor agonists, octopamine receptor agonists, mitochondrial complex III electron transport inhibitors, mitochondrial complex I electron transport inhibitors (METI), voltage-dependent sodium channel blockers, inhibitors of acetyl CoA carboxylase, mitochondrial complex IV electron transport inhibitors, mitochondrial complex II electron transport inhibitors, ryanodine receptor modulators, chordotonal organ modulators, GABA-gated chloride channel allosteric modulators, and baculoviruses.

Specifically, examples of the acetylcholinesterase (AChE) inhibitors include alanycarb, aldicarb, bendiocarb, benfuracarb, butocarboxim, butoxycarboxim, carbaryl (NAC), carbofuran, carbosulfan, ethiofencarb, fenobucarb (BPMC), fenothiocarb, formetanate, furathiocarb, isoprocarb (MIPC), methiocarb, methomyl, metolcarb (MTMC), oxamyl, pirimicarb, propoxur (PHC), thiodicarb, thiofanox, triazamate, trimethacarb, XMC, xylylcarb (MPMC), acephate, azamethiphos, azinphos-ethyl, azinphos-methyl, cadusafos, chlorethoxyfos, chlorfenvinphos (CVP), chlormephos, chlorpyrifos, chlorpyrifos-methyl, coumaphos, cyanophos (CYAP), demeton-S-methyl, diazinon, dichlorvos (DDVP), dicrotophos, dimethoate, dimethylvinphos, ethylthiomethon (disulfoton), EPN, ethion, ethoprophos, famphur, fenamiphos, fenitrothion (MEP), fenthion (MPP), fosthiazate, heptenophos, imicyafos, isofenphos, isopropyl O-(methoxyaminothiophosphoryl)salicylate, isoxathion, malathon (malathion), mecarbam, methamidophos, methidathion (DMTP), mevinphos, monocrotophos, naled (BRP), omethoate, oxydemeton-methyl, parathion, methyl parathion (parathion-methyl), phenthoate (PAP), phorate, phosalone, phosmet (PMP), phosphamidon, phoxim, pirimiphos-methyl, profenofos, propetamphos, prothiofos, pyraclofos, pyridaphenthion, quinalphos, sulfotep, tebupirimfos, temephos, terbufos, tetrachlorvinphos (CVMP), thiometon, triazophos, trichlorfon (DEP), and vamidothion.

Examples of the GABA-gated chloride channel blockers include chlordane, benzoepin (endosulfan), dienochlor, ethiprole, fipronil, pyriprole, and nicofluprole.

Examples of the sodium channel modulators include acrinathrin, allethrin (allethrin, d-cis-trans-, d-trans-isomers), bifenthrin, bioallethrin (bioallethrin, S-cyclopentenyl-isomers), bioresmethrin, chloroprallethrin, chlorfenson, cycloprothrin, cyfluthrin (cyfluthrin, β-isomers), cyhalothrin (cyhalothrin, λ-, γ-isomers), cypermethrin (cypermethrin, α-, β-, θ-, ζ-isomers), cyphenothrin [(1R)-trans-isomers], deltamethrin, dimefluthrin, empenthrin [(EZ)-(1R)-isomers], esfenvalerate, etofenprox, fenpropathrin, fenvalerate, flubrocythrinate, flucythrinate, flumethrin, fluvalinate (τ-fluvalinate), halfenprox, imiprothrin, kadethrine, metofluthrin, momfluorothrin, epsilon-metofluthrin, epsilon-momfluorothrin, permethrin, phenothrin [(1R)-trans isomer], prallethrin, profluthrin, pyrethrin, resmethrin, silafluofen, tefluthrin, phthalthrin (tetramethrin), tetramethrin [(1R)-isomers], tralomethrin, transfluthrin, DDT, methoxychlor, aldrin, dieldrin, and lindane (lindene).

Examples of the nicotinic acetylcholine receptor (nAChR) competitive modulators include acetamiprid, clothianidin, dinotefuran, imidacloprid, nitenpyram, thiacloprid, thiamethoxam, nicotine sulfate (nicotine), sulfoxaflor, flupyradifurone, dicloromezotiaz, fenmezoditiaz, and triflumezopyrim.

Examples of the nicotinic acetylcholine receptor (nAChR) allosteric modulators include spinetoram, spinosad, flupyrimin, and GS-omega/kappa HXTX-Hv1a peptide.

Examples of the glutamate-gated chloride channel (GluCl) allosteric modulators include abamectin, emamectin benzoate, lepimectin, and milbemectin.

Examples of the juvenile hormone mimics include hydroprene, kinoprene, methoprene, fenoxycarb, and pyriproxyfen.

Examples of the miscellaneous non-specific (multi-site) inhibitors include methyl bromide, other alkyl halides, chloropicrin, sodium aluminum fluoride, sulfuryl fluoride, borax, boric acid, disodium octaborate, sodium metaborate, tartar emetic, dazomet, carbam (metam-ammonium), metam-sodium (carbam sodium), and methyl isothiocyanate.

Examples of the chordotonal organ TRPV channel modulators include pymetrozine, pyrifluquinazon, and afidopyropen.

Examples of the mite growth inhibitors affecting CHS1 include clofentezine, diflovidazin, hexythiazox, and etoxazole.

Examples of the microbial disruptors of insect midgut membranes include Bacillus thuringiensis subsp. israelensis, Bacillus thuringiensis subsp. aizawai, Bacillus thuringiensis subsp. kurstaki, Bacillus thuringiensis subsp. tenebrionis, proteins contained in Bt crops (Cry1Ab, Cry1Ac, Cry1Fa, Cry1A.105, Cry2Ab, Vip3A, mCry3A, Cry3Bb, and Cry34Ab1/Cry35Ab1), and Bacillus sphaericus.

Examples of the inhibitors of mitochondrial ATP synthase include diafenthiuron, azocyclotin, tricyclohexyltin hydroxide (cyhexatin), fenbutatin oxide, propargite (BPPS), and tetradifon.

Examples of the uncouplers of oxidative phosphorylation via disruption of proton gradient include chlorfenapyr, DNOC, and sulfluramid.

Examples of the nicotinic acetylcholine receptor (nAChR) channel blockers include bensultap, cartap hydrochloride, thiocyclam, thiosultap sodium, and monosultap.

Examples of the inhibitors of chitin biosynthesis affecting CHS1 include bistrifluron, chlorfluazuron, diflubenzuron, flucycloxuron, flufenoxuron, hexaflumuron, lufenuron, novaluron, noviflumuron, teflubenzuron, and triflumuron.

Examples of the inhibitors of chitin biosynthesis (type 1) include buprofezin.

Examples of the molting disruptors (dipteran) include cyromazine.

Examples of the molting hormone (ecdysone) receptor agonists include chromafenozide, halofenozide, methoxyfenozide, and tebufenozide.

Examples of the octopamine receptor agonists include amitraz.

Examples of the mitochondrial complex III electron transport inhibitors include hydramethylnon, acequinocyl, fluacrypyrim, flupyroxystrobin, and bifenazate.

Examples of the mitochondrial complex I electron transport inhibitors (METI) include fenazaquin, fenpyroximate, pyridaben, pyrimidifen, tebufenpyrad, tolfenpyrad, and derris (rotenone).

Examples of the voltage-dependent sodium channel blockers include indoxacarb and metaflumizone.

Examples of the inhibitors of acetyl CoA carboxylase include spirodiclofen, spiromesifen, spiropidion, spidoxamat, spirobudifen, and spirotetramat.

Examples of the mitochondrial complex IV electron transport inhibitors include aluminum phosphide, calcium phosphide, phosphine, zinc phosphide, prussic acid (calcium cyanide, sodium cyanide), and potassium cyanide.

Examples of the mitochondrial complex II electron transport inhibitors include cyenopyrafen, cyetpyrafen, cyflumetofen, pyflubumide, and cyclobutrifluram.

Examples of the ryanodine receptor modulators include chlorantraniliprole, cyantraniliprole, cyclaniliprole, flubendiamide, tetraniliprole, fluchlordiniliprole, tiorantraniliprole pioxaniliprole, tetrachlorantraniliprole, cyhalodiamide, and cyproflanilide.

Examples of the chordotonal organ modulators include flonicamid.

Examples of the GABA-gated chloride channel allosteric modulators include broflanilide, fluxametamide, and isocycloseram.

Examples of the baculoviruses include codling moth (Cydia pomonella GV), false codling moth (Thaumatotibia leucotreta GV), velvetbean caterpillar (Anticarsis gemmatalis MNPV), and cotton bollworm (Helicoverpa armigera NPV).

Examples of other insecticides, miticides, and nematicides include azadirachtin, benzomate (benzoximate), phenisobromolate (bromopropylate), quinoxaline system (chinomethionate), Kelthane (dicofol), lime sulfur, manzeb, pyridalyl, sulfur, acynonapyr, amidoflumet, benzpyrimoxan, fluazaindolizine, fluensulfone, fluhexafon, flupentiofenox, flometoquin, metaldehyde, tyclopyrazoflor, dimpropyridaz, trifluenfuronate, indazapyroxamet, sulfiflumin, bisulflufen, isoflualanam, piperflanilide, Burkholderia spp., Wolbachia pipientis (Zap), Chenopodium ambrosioides near ambrosioides extracts, fatty acid monoesters with glycerol or propanediol, neem oil, machine oil, rapeseed oil, blended oils, starch, saccharified reduced starch, sodium oleate, ferric phosphate, nemadectin, Beauveria bassiana strains, Metarhizium anisopliae strain (F52), Paecilomyces fumosoroseus Apopka strain (97), diatomaceous earth, dichlorodiisopropyl ether (DCIP), 1,3-dichloropropene (D-D), levamisole hydrochloride, morantel tartrate, and tioxazafen.

Examples of the herbicides include acetolactate synthesis (ALS) inhibitor compounds, amino acid-based compounds, cyclohexanedione-based compounds, acetamide-based compounds, bipyridinium-based compounds, allyloxyphenoxypropionic acid-based compounds, carbamate-based compounds, pyridine-based compounds, urea-based compounds, dinitroaniline-based compounds, protoporphyrinogen oxidase (PPO) inhibitor compounds, phenoxyacetic acid-based compounds, hydroxyphenylpyruvate dioxygenase enzyme (HPPD) inhibitor compounds, and triazine-based compounds.

Specific examples of the acetolactate synthase (ALS) inhibitor compounds include imazamethabenz and imazamethabenz-methyl, imazamox, imazapic, imazapyr, imazaquin, imazethapyr, amidosulfuron, azimsulfuron, bensulfuron and bensulfuron-methyl, chlorimuron and chlorimuron-methyl, chlorimuron-ethyl, chlorsulfuron, cinosulfuron, cyclosulfamuron, ethametsulfuron and ethametsulfuron-methyl, ethoxysulfuron, flazasulfuron, flucetosulfuron, flupyrsulfuron, flupyrsulfuron-methyl and salts thereof, foramsulfuron, halosulfuron, halosulfuron-methyl, imazosulfuron, iodosulfuron and salts thereof, iodosulfuron-methyl and salts thereof, mesosulfuron, mesosulfuron-methyl, metazosulfuron, metsulfuron, metsulfuron-methyl, nicosulfuron, oxasulfuron, primisulfuron, primisulfuron-methyl, propyrisulfuron, prosulfuron, pyrazosulfuron, pyrazosulfuron-ethyl, rimsulfuron, sulfometuron, sulfometuron-methyl, sulfosulfuron, thifensulfuron, thifensulfuron-methyl, triasulfuron, tribenuron, tribenuron-methyl, trifloxysulfuron and salts thereof, triflusulfuron, triflusulfuron-methyl, tritosulfuron, imazamethabenz-methyl, bispyribac-sodium, cloransulam, cloransulam-methyl, diclosulam, florasulam, flucarbazone and salts thereof, flumetsulam, metosulam, orthosulfamuron, penoxsulam, pyroxsulam, propoxycarbazone and salts thereof, pyribenzoxim, pyriftalid, pyriminobac-methyl, pyrimisulfan, pyrithiobac and salts thereof, pyroxsulam, thiencarbazone, thiencarbazone-methyl, and triafamone.

Examples of the amino acid-based compounds include bialaphos and salts thereof, glufosinate and salts thereof, glufosinate P and salts thereof, and glyphosate and salts thereof.

Examples of the cyclohexanedione-based compounds include alloxydim, butroxydim, clethodim, cloproxydim, cycloxydim, profoxydim, sethoxydim, tepraloxydim, tralkoxydim, and feproxydim.

Examples of the acetamide-based compounds include napropamide, dimethachlor, pethoxamid, acetochlor, alachlor, allidochlor (CDAA), butenachlor, delachlor, diethatyl-ethyl, propisochlor, prynachlor, butachlor, dimethenamid, dimethenamid-P, metazachlor, metolachlor, S-metolachlor, pretilachlor, propachlor, thenylchlor, flufenacet, and mefenacet.

Examples of the bipyridinium-based compounds include cyperquat, morfamquat, diquat, and paraquat.

Examples of the allyloxyphenoxypropionic acid-based compounds include clodinafop, clodinafop-propargyl, clofop, cyhalofop-butyl, diclofop, diclofop-methyl, diclofop-P-methyl, fenoxaprop, fenoxaprop-ethyl, fenoxaprop-P-ethyl, fluazifop, fluazifop-butyl, fluazifop-P-butyl, haloxyfop, haloxyfop-methyl, haloxyfop-P-methyl, isoxapyrifop, metamifop, propaquizafop, quizalofop, quizalofop-ethyl, quizalofop-P-ethyl, and quizalofop-P-tefuryl.

Examples of the carbamate-based compounds include asulam, carbetamide, desmedipham, chlorprocarb, phenisopham, cycloate, dimepiperate, pebulate, tiocarbazil, vernolate, barban, chlorbufam, chlorpropham, propham, swep, phenmedipham, butylate, EPTC, esprocarb, molinate, orbencarb, prosulfocarb, pyributicarb, thiobencarb (benthiocarb) and tri-allate.

Examples of the pyridine-based compounds include aminopyralid, clopyralid, diflufenican, dithiopyr, fluridone, fluroxypyr, halauxifen, florpyrauxifen, picloram and salts thereof, picolinafen, thiazopyr, and triclopyr and salts thereof.

Examples of the urea-based compounds include benzothiazolone, bromuron, buturon, chlorbromuron, chloroxuron, difenoxuron, dimefuron, ethidimuron, fenuron, fluothiuron, metobenzuron, metobromuron, metoxuron, monolinuron, monuron (CMU), neburon, parafluron, siduron, thiazafluron, chlorotoluron, dymron, diuron (DCMU), fluometuron, isoproturon, linuron, methabenzthiazuron, tebuthiuron, cumyluron, karbutilate, and isouron.

Examples of the dinitroaniline-based compounds include benfluralin (bethrodine), butralin, dinitramine, ethalfluralin, fluchloralin, isopropalin, nitralin, profluralin, oryzalin, pendimethalin, prodiamine, and trifluralin.

Examples of the protoporphyrinogen oxidase (PPO) inhibitor compounds include acifluorfen, aclonifen, azafenidin, bifenox, chlomethoxynil, ethoxyfen, ethoxyfen-ethyl, fomesafen, fluazolate, fluoroglycofen, fluoroglycofen-ethyl, halosafen, lactofen, oxyfluorfen, butafenacil, epyrifenacil, chlornitrofen (CNP), fluorodifen, fluoronitrofen (CFNP), nitrofen (NIP), oxyfluorfen, chlorphthalim, flumipropyn, carfentrazone, carfentrazone-ethyl, cinidon-ethyl, flumiclorac-pentyl, flumioxazin, fluthiacet, fluthiacet-methyl, oxadiargyl, oxadiazon, pentoxazone, pyraclonil, pyraflufen, pyraflufen-ethyl, saflufenacil, sulfentrazone, thidiazimin, benzfendizone, profluazol, and flufenpyr-ethyl.

Examples of the phenoxyacetic acid-based compounds include 2,4,5-T, 2,4-D and salts thereof, 2,4-DB and salts thereof, clomeprop, dichlorprop, fenoprop, MCPA and salts thereof, MCPB and salts thereof, mecoprop (MCPP) and salts thereof, and mecoprop-P and salts thereof.

Examples of the hydroxyphenylpyruvate dioxygenase enzyme (HPPD) inhibitor compounds include benzobicyclon, benzofenap, bicyclopyrone, isoxaflutol, mesotrione, pyrasulfotol, pyrazolynate (pyrazolate), pyrazoxyfen, sulcotrione, tefuryltrione, tembotrione, topramezone, fenquinotrione, and tolpyralate.

Examples of the triazine-based compound include atraton, aziprotryn, chlorazine, cyprazine, desmetryn, dipropetryn, eglinazine-ethyl, ipazine, methoprotryne, procyazine, proglinazine, prometon, propazine, sebuthylazine, secbumeton, terbumeton, trietazine, ametryn, atrazine, cyanazine, dimethametryn, hexazinone, indaziflam, metamitron, metribuzin, prometryn, simazine (CAT), simetryn, terbuthylazine, terbutryn, and triaziflam.

Examples of the other herbicides include amicarbazone, ethiozin, isomethiozin, aminocyclopyrachlor, aminotriazole, anilofos, piperophos, beflubutamid, benazolin, benfuresate, bentazone, bromacil, isocil, bromobutide, bromofenoxim, bromoxynil, butamifos, DMPA, chlorthal-dimethyl (TCTP), cafenstrole, chloridazon (PAC), brompyrazon, chlorthal, clomazone, cumyluron, dicamba (MDBA) and salts thereof, chloramben, 2,3,8-TBA (TCBA), benazolin-ethyl, chlorfenac, chlorfenprop, dichlobenil (DBN), chlorthiamid (DCBN), cinmethylin, methiozolin, amitrol, flamprop-M, fosamine, methyldymron, monalide, MSMA, difenzoquat, diflufenzopyr, endothall and salts thereof, ethofumesate, etobenzanid, fenoxasulfone, fentrazamide, flupoxam, fluorochloridone, flurtamone, indanofan, tridiphane, ioxynil, ipfencarbazone, isoxaben, triaziflam, lenacil, methylarsonic acid, naptalam, flurochloridone, norflurazon, oxaziclomefone, pinoxaden, chloranocryl=dicryl, pentanochlor (CMMP), propanil, propyzamide, pyridate, pyroxasulfone, promacyl, quinclorac, quinmerac, quinoclamine, terbacil, cyclopyrimorate, florpyrauxifen-benzyl, lancotrione and salts thereof, cyclopyranil, bixlozone, tetflupyrolimet, dimesulfazet, dinosam, dinoseb (DNBP), DNOC, dinoterb, etinofen, medinoterb, DSMA, cacodylic acid, diphenamid, naproanilide, tebutam, bensulide, dalapon, TCA, mefluidide, perfluidone, CAMA, tiafenacil, trifludimoxazin, rimisoxafen, fenpyrazone, dioxopyritrione, cypyrafluone, bipyrazone, benquitrione, fluchloraminopyr, pyriflubenzoxim, flufenoximacil, iptriazopyrid, flusulfinam, broclozone, indolauxypyr, icafolin, pyraquinate, metproxybicyclone, tetrapion (flupropanate) and salts thereof, and d-limonene.

The formulation only needs to contain the active component in such an amount that the amount applied per 0.1 g of the propagule is in the range described above. For example, the amount of the treatment agent containing the carrier and the active component can be 0.005 ng or more and 100 mg or less, and is preferably 0.05 ng or more and 50 mg or less, and more preferably 0.5 ng or more and 20 mg or less, per 10 µL of the treatment liquid. As the carrier, the above-mentioned carriers can be used without limitation, but a liquid carrier is preferable, and water is more preferable. The treatment agent preferably contains the above-mentioned formulation aid as another component.

The formulation can be prepared by mixing the active component with another component. At the time, a solid carrier or a liquid carrier may be used to prepare the formulation having a predetermined form. Note that as the active component, an extract of a microorganism, a plant, or a seaweed containing the active component may be used as it is or as a mixture with another component.

These formulations preferably contain the active component in an amount of 0.01 wt.% or more and 90 wt.% or less, and more preferably 0.1 wt.% or more and 50 wt.% or less, relative to the total weight of the formulation.

The above-mentioned formulation may be used as the treatment agent as it is, or may be used as the treatment agent prepared by, for example, mixing with the above-mentioned formulation aid or another active ingredient. Note that when the other active ingredient is mixed, a formulation containing the other active ingredient may be, mixed with the formulation containing the above-mentioned active component to prepare the treatment agent.

The propagule treated with the above-mentioned treatment agent contains the active component on the surface or inside thereof. The propagule preferably contains the active component therein. The active component is preferably deposited onto the surface of the propagule, and more preferably covers the surface of the propagule together with other components added to the treatment agent as necessary. The amount of the active component contained in the propagule is preferably 0.05 µg or more and 100 mg or less, more preferably 0.5 µg or more and 30 mg or less, more preferably 0.5 µg or more and 8 mg or less, and particularly preferably 0.5 µg or more and 5 mg or less, per 1 g of the propagule.

The treated propagule can be grown and sprouted under normal conditions for the growth of the propagule. For example, the propagule only needs to be stimulated with water, sunlight, nutrients, or the like to be sprouted. The growing may be carried out by sowing or embedding the propagule in soil, or by placing the propagule in a liquid, solid, or gel medium. In the present embodiment, the treatment of the propagule with the active component is performed before start of growing (i.e., before sowing or the like).

The plant thus grown may be grown as it is until the end of cultivation without being transplanted, or a transplanted seedling grown to a certain extent may be transplanted into another soil or medium and further grown.

### Other embodiments

Note that the above-described embodiment is an exemplary embodiment of the present invention, and it is needless to say that the present invention can include embodiments other than the above-described embodiment within the scope of the core technical idea thereof.

### [EXAMPLES]

The present invention will be described in detail below based on examples, but the present invention is not limited to these examples.

Evaluation Example 1: Comparison of elongated plant height of broccoli

### Treatment Example 1

Seed treatment agents of Examples 1 to 3 and Comparative Example 1 were each prepared in such a manner that a treatment amount with ergothioneine (EGT) was the EGT treatment amount shown in Table 1 below. A commercially available EGT was used, and pure water was used as a solvent.

0.1 g of broccoli (Ryokuseki) seeds were placed in a microtube, 10 µL of a seed treatment agent was added thereto, mixed by inversion, and then air-dried for 10 minutes. In a plastic pot having a diameter of 135 mm and a height of 114 mm, 1 kg of seedling raising soil (available from TAKII & CO., LTD.) was placed, and one individual treated broccoli seed was sown per one pot. Ten pots were installed in each treatment section, and managed in a greenhouse set at room temperature of 25°C.

### Treatment Example 2

An EGT solution of Comparative Example 2 was prepared in such a manner that the treatment amount with EGT was the EGT treatment amount shown in Table 1 below. A commercially available EGT was used, and pure water was used as a solvent.

In a plastic pot having a diameter of 135 mm and a height of 114 mm, 1 kg of seedling raising soil (available from TAKII & CO., LTD.) was placed, and one individual untreated broccoli seed was sown per one pot. Ten pots were installed in each treatment section. The pots were managed in a greenhouse set at room temperature of 25°C.

In Comparative Example 2, 50 mL of the EGT solution was applied by irrigation to each broccoli total three times of Days 19, 21, and 23 after sowing.

On Day 35 after sowing, the plant heights of the broccoli of Treatment Example 1 and Treatment Example 2 were measured. The evaluation results are indicated in Table 1.

**[Table 1]**

| | Treatment Example 1 Seed treatment | Treatment Example 2 Treatment of plant base | | EGT treatment amount per plant | Plant height (Ratio to untreated control) |
|---|---|---|---|---|---|
| | EGT treatment amount per 0.1 g of seeds | EGT concentration | Number of treatments | | |
| Example 1 | 0.01 mg | - | - | 0.3 µg | 1.4 |
| Example 2 | 0.1 mg | - | - | 3.3 µg | 1.2 |
| Example 3 | 1.0 mg | - | - | 33.3 µg | 1.2 |
| Comparative Example 1 | 0 mg | - | - | - | - |
| Comparative Example 2 | - | 0.5 mM | 3 times | 17.2 mg | 1.1 |

As shown in Table 1, with the seed treatment agents of Examples 1, 2, and 3, broccolis were higher in plant height than the broccoli treated with the seed treatment agent without EGT (Comparative Example 1) and the broccoli treated with EGT by treatment of irrigation, which indicates that the seed treatment agents of Examples 1, 2, and 3 were excellent in plant growth promoting effect. In addition, it was confirmed that the seed treatment agents of Examples 1, 2, and 3 had an excellent plant growth effect even though the EGT treatment amount per plant was significantly smaller than that of the seed treatment agent of treatment of irrigation (Comparative Example 2).

### Evaluation Example 2: Comparison of seed yield of Arabidopsis thaliana

### Treatment Example 3

Seed treatment agents of Examples 4 to 6 and Comparative Example 3 were each prepared in such a manner that a treatment amount with ergothioneine (EGT) was the EGT treatment amount shown in Table 2 below. A commercially available EGT was used, and pure water was used as a solvent.

0.01 g of Arabidopsis thaliana (Col-O) seeds were placed in a microtube, 20 µL of a seed treatment agent was added thereto, mixed by inversion, and then air-dried. In a plastic pot having a diameter of 60 mm and a height of 55 mm, 90 mL of seedling raising soil (available from TAKII & CO., LTD.) was placed, and one individual treated Arabidopsis thaliana seed was sown per one pot. A plastic deep dish having a diameter of 160 mm and a height of 28 mm was prepared, and 6 pots were installed therein. The light period was set to 16 hours and the dark period was set to 8 hours at an internal temperature of an artificial climate chamber set at room temperature of 22°C. As a light condition, the light intensity was set to 5000 lx at a central portion under fluorescent light irradiation. The water supply was bottom watering and the water level was set to about 5 mm.

### Treatment Example 4

An EGT solution of Comparative Example 4 was prepared in such a manner that the treatment amount with EGT was the EGT treatment amount shown in Table 2 below. A commercially available EGT was used, and pure water was used as a solvent.

In a plastic pot having a diameter of 60 mm and a height of 55 mm, 90 mL of seedling raising soil (available from TAKII & CO., LTD.) was placed, and one individual untreated Arabidopsis thaliana seed was sown per one pot. A plastic deep dish having a diameter of 160 mm and a height of 28 mm was prepared, and 6 pots were installed therein. The light period was set to 16 hours and the dark period was set to 8 hours at an internal temperature of an artificial climate chamber set at room temperature of 22°C. As a light condition, the light intensity was set to 5000 lx at a central portion under fluorescent light irradiation. The water supply was bottom watering and the water level was set to about 5 mm.

In Comparative Example 4, 75 mL of the EGT solution was added instead of the water supply five times in total on Days 27, 29, 31, 33, and 35 after sowing.

On Day 80 after sowing, the seed yield of Arabidopsis thaliana in Treatment Example 3 and Treatment Example 4 were measured. The evaluation results are indicated in Table 2.

**[Table 2]**

| | Treatment Example 3 Seed treatment | Treatment Example 4 Bottom watering | | EGT treatment amount per plant | Seed yield (Ratio to untreated control) |
|---|---|---|---|---|---|
| | EGT treatment amount per 0.1 g of seeds | EGT concentration | Number of treatments | | |
| Example 4 | 0.001 mg | - | - | 0.00017 µg | 1.4 |
| Example 5 | 0.01 mg | - | - | 0.0017 µg | 1.4 |
| Example 6 | 0.1 mg | - | - | 0.017 µg | 1.5 |
| Comparative Example 3 | 0 mg | - | - | - | - |
| Comparative Example 4 | - | 0.5 mM | 5 times | 4.8 mg | 1.0 |

As shown in Table 2, with the seed treatment agents of Examples 4, 5, and 6, seed yields were higher than those of the Arabidopsis thaliana treated with the seed treatment agent without EGT (Comparative Example 3) and the Arabidopsis thaliana treated with EGT by bottom watering, which indicates that the seed treatment agents of Examples 4, 5, and 6 were excellent in plant growth promoting effect. In addition, it was confirmed that the seed treatment agents of Examples 4, 5, and 6 had an excellent plant growth effect even though the EGT treatment amount per plant was significantly smaller than that of the bottom watering (Comparative Example 4).

### Evaluation Example 3: Comparison of number of flower buds and fruit yield of tomato

### Treatment Example 5

Seed treatment agents of Examples 7 to 9 and Comparative Example 5 were each prepared in such a manner that a treatment amount with ergothioneine (EGT) was the EGT treatment amount shown in Table 3 below. A commercially available EGT was used, and pure water was used as a solvent.

0.1 g of tomato (Regina) seeds were placed in a microtube, 50 µL of a seed treatment agent was added thereto, mixed by inversion, and then air-dried. In a plastic pot having a diameter of 135 mm and a height of 114 mm, 1 kg of seedling raising soil (available from TAKII & CO., LTD.) was placed, and one individual treated tomato seed was sown per one pot. Five pots were installed in each treatment section, and managed in a greenhouse set at room temperature of 25°C.

### Treatment Example 6

An EGT solution of Comparative Example 6 was prepared in such a manner that the treatment amount with EGT was the EGT treatment amount shown in Table 3 below. A commercially available EGT was used, and pure water was used as a solvent.

In a plastic pot having a diameter of 135 mm and a height of 114 mm, 1 kg of seedling raising soil (available from TAKII & CO., LTD.) was placed, and one individual untreated tomato seed was sown per one pot. Five pots were installed in each treatment section. The pots were managed in a greenhouse set at room temperature of 25°C.

In Comparative Example 6, 50 mL of the EGT solution was applied by irrigation to each tomato six times in total of Days 33, 35, 37, 39, 41, and 43 after sowing.

The numbers of flowers and buds of tomatoes in Treatment Example 5 and Treatment Example 6 were measured on Day 86 after sowing, and the numbers of fruits and fruit yields of tomatoes up to Day 130 after sowing were measured. The evaluation results are indicated in Table 3.

**[Table 3]**

| | Treatment Example 5 Seed treatment | Treatment Example 6 Treatment of plant base | | EGT treatment amount per plant | Number of flowers and buds (Ratio to untreated control) | Number of fruits (Ratio to untreated control) | Fruit yield (Ratio to untreated control) |
|---|---|---|---|---|---|---|---|
| | EGT treatment amount per 0.1 g of seeds | EGT concentration | Number of treatments | | | | |
| Example 7 | 0.001 mg | - | - | 0.02 µg | 1.1 | 1.3 | 1.4 |
| Example 8 | 0.01 mg | - | - | 0.2 µg | 1.1 | 1.2 | 1.3 |
| Example 9 | 0.1 mg | - | - | 2 µg | 1.1 | 1.4 | 1.4 |
| Comparative Example 5 | 0 mg | - | - | - | - | - | - |
| Comparative Example 6 | - | 0.5 mM | 6 times | 34.4 mg | 1.0 | 1.1 | 1.2 |

As shown in Table 3, with the seed treatment agents of Examples 7, 8, and 9, the number of flowers and buds, the number of fruits, and the fruit yield were higher than those of the Arabidopsis thaliana treated with the seed treatment agent without EGT (Comparative Example 5) and the Arabidopsis thaliana treated with EGT by treatment of irrigation, which indicates that the seed treatment agents of Examples 7, 8, and 9 were excellent in growth promoting effect. In addition, it was confirmed that the seed treatment agents of Examples 7, 8, and 9 had an excellent growth promoting effect even though the EGT treatment amount per plant was significantly smaller than that of the seed treatment agent of treatment of irrigation (Comparative Example 6).

### Evaluation Example 4: Comparison of germination rate of Potherb Mustard

### Treatment Example 7

Seed treatment agents of Examples 10 and 11 and Comparative Example 7 and Comparative Example 8 were each prepared in such a manner that a treatment amount with ergothioneine (EGT) was the EGT treatment amount shown in Table 4 below. A commercially available EGT was used, and pure water was used as a solvent.

0.1 g of Potherb Mustard (Sensujikyona) seeds were placed in a microtube, 20 µL of a seed treatment agent was added thereto, mixed by inversion, and then air-dried. 5 mL of pure water was added to a 9-cm petri dish on which filter paper was placed, and 20 treated Potherb Mustard seeds were sown. The light period was set to 16 hours and the dark period was set to 8 hours at an internal temperature of an artificial climate chamber set at room temperature of 22°C. As a light condition, the light intensity was set to 5000 lx at a central portion under fluorescent light irradiation.

### Treatment Example 8

EGT solutions of Comparative Examples 7 and 8 were each prepared in such a manner that the treatment amount with EGT was the EGT treatment amount shown in Table 4 below. A commercially available EGT was used, and pure water was used as a solvent.

10 mL of EGT solution was added to a 9-cm petri dish on which filter paper was placed, and 20 untreated Potherb Mustard seeds were sown. The light period was set to 16 hours and the dark period was set to 8 hours at an internal temperature of an artificial climate chamber set at room temperature of 22°C. As a light condition, the light intensity was set to 5000 lx at a central portion under fluorescent light irradiation.

On Day 5 after sowing, germination rates of the Potherb Mustard of Treatment Example 7 and Treatment Example 8 were measured. The evaluation results are indicated in Table 4.

**[Table 4]**

| | Treatment Example 7 Seed treatment | Treatment Example 8 Hydroponic cultivation | EGT treatment amount per plant | Germination rate |
|---|---|---|---|---|
| | EGT treatment amount per 0.1 g of seeds | EGT concentration | | |
| Example 10 | 0.001 mg | - | 0.25 µg | 95% |
| Example 11 | 0.005 mg | - | 1.3 µg | 95% |
| Comparative Example 7 | - | 0.01 mM | 1.12 µg | 75% |
| Comparative Example 8 | - | 0.1 mM | 11.2 µg | 75% |

As shown in Table 4, with the seed treatment agents of Examples 10 and 11, the germination rates were higher than that of the Potherb Mustard treated with EGT by hydroponic cultivation, which indicates that the seed treatment agents of Examples 10 and 11 were excellent in germination promoting effect. In addition, it was confirmed that the seed treatment agents of Examples 10 and 11 had an excellent germination promoting effect even though the EGT treatment amount per plant was significantly smaller than that of the hydroponic cultivation (Comparative Examples 7 and 8).

### Evaluation Example 5: Comparison of elongated plant height of turnip leaf

### Treatment Example 9

Seed treatment agents of Examples 12 and 13 and Comparative Examples 9 to 12 were each prepared in such a manner that a treatment amount with ergothioneine (EGT) was the EGT treatment amount shown in Table 5 below. A commercially available EGT was used, and pure water was used as a solvent.

0.1 g of turnip leaf seeds were placed in a microtube, 20 µL of a seed treatment agent was added thereto, mixed by inversion, and then air-dried. 5 mL of pure water was added to a 9-cm petri dish on which filter paper was placed, and 20 treated turnip leaf seeds were sown. The light period was set to 16 hours and the dark period was set to 8 hours at an internal temperature of an artificial climate chamber set at room temperature of 22°C. As a light condition, the light intensity was set to 5000 lx at a central portion under fluorescent light irradiation.

### Treatment Example 10

EGT solutions of Comparative Examples 10 to 12 were prepared in such a manner that the treatment amount with EGT was the EGT treatment amount shown in Table 5 below. A commercially available EGT was used, and pure water was used as a solvent.

10 mL of EGT solution was added to a 9-cm petri dish on which filter paper was placed, and 20 untreated turnip leaf seeds were sown. The light period was set to 16 hours and the dark period was set to 8 hours at an internal temperature of an artificial climate chamber set at room temperature of 22°C. As a light condition, the light intensity was set to 5000 lx at a central portion under fluorescent light irradiation.

On Day 5 after sowing, the plant heights of the turnip leaves of Treatment Example 9 and Treatment Example 10 were measured. The evaluation results are indicated in Table 5.

**[Table 5]**

| | Treatment Example 9 Seed treatment | Treatment Example 10 Hydroponic cultivation | EGT treatment amount per plant | Plant height (Ratio to untreated control) |
|---|---|---|---|---|
| | EGT treatment amount per 0.1 g of seeds | EGT concentration | | |
| Example 12 | 0.001 mg | - | 0.31 µg | 1.2 |
| Example 13 | 0.005 mg | - | 1.55 µg | 1.2 |
| Comparative Example 9 | 0 mg | - | - | 1.0 |
| Comparative Example 10 | - | 0.01 mM | 1.12 µg | 1.1 |
| Comparative Example 11 | - | 0.1 mM | 11.2 µg | 1.1 |
| Comparative Example 12 | - | 0 mM | - | - |

As shown in Table 5, with the seed treatment agents of Examples 12 and 13, the turnip leaves were higher in plant height than the turnip leaf treated with the seed treatment agent without EGT (Comparative Example 9) and the turnip leaf treated with EGT by hydroponic cultivation, which indicates that the seed treatment agents of Examples 12 and 13 were excellent in plant growth promoting effect. In addition, it was confirmed that the seed treatment agents of Examples 12 and 13 had an excellent plant growth effect even though the EGT treatment amount per plant was significantly smaller than that of hydroponic cultivation (Comparative Examples 10 and 11).

### Evaluation Example 6: Comparison of EGT content of Potherb Mustard seeds

### Treatment Example 11

A seed treatment agent of Example 14 was prepared in such a manner that a treatment amount with ergothioneine (EGT) was the EGT treatment amount shown in Table 6 below. A commercially available EGT was used, and pure water was used as a solvent.

0.1 g of Potherb Mustard (Sensujikyona) seeds were placed in a microtube, 20 µL of a seed treatment agent was added thereto, mixed by inversion, and then air-dried. 5 mL of pure water was added to a 9-cm petri dish on which filter paper was placed, and 20 treated Potherb Mustard seeds were sown. The light period was set to 16 hours and the dark period was set to 8 hours at an internal temperature of an artificial climate chamber set at room temperature of 22°C. As a light condition, the light intensity was set to 5000 lx at a central portion under fluorescent light irradiation.

### Treatment Example 12

An EGT solution of Comparative Example 13 was prepared in such a manner that the treatment amount with EGT was the EGT treatment amount shown in Table 6 below. A commercially available EGT was used, and pure water was used as a solvent.

10 mL of EGT solution was added to a 9-cm petri dish on which filter paper was placed, and 20 untreated Potherb Mustard seeds were sown. The light period was set to 16 hours and the dark period was set to 8 hours at an internal temperature of an artificial climate chamber set at room temperature of 22°C. As a light condition, the light intensity was set to 5000 lx at a central portion under fluorescent light irradiation.

Two hours after sowing, the seeds of Treatment Example 11 and Treatment Example 12 were collected. The collected seeds were washed with pure water and then ground in a mortar. The ground seeds were suspended in 0.5 mL of pure water and the suspension was heated at 120°C for 10 minutes. After cooling to room temperature, centrifugation was performed at 12000 rpm for 5 minutes, and the EGT concentration of the collected supernatant was measured. The evaluation results are indicated in Table 6.

**[Table 6]**

| | Treatment Example 11 Seed treatment | Treatment Example 12 Hydroponic cultivation | EGT treatment amount per seed | Collected EGT concentration |
|---|---|---|---|---|
| | EGT treatment amount per 0.1 g of seeds | EGT concentration | | |
| Example 14 | 0.043 mg | - | 11.2 µg | 4.6 mg/L |
| Comparative Example 13 | - | 0.1 mM | 11.2 µg | 0.7 mg/L |

As shown in Table 6, it was confirmed that the Potherb Mustard seeds treated with the seed treatment agent of Example 14 contained a significantly larger amount of EGT than that of the Potherb Mustard seeds subjected to hydroponic cultivation of Comparative Example 13 even though the EGT treatment amount per seed was the same.

The present application claims priority to Japanese Patent Application No. 2023-178169 filed on October 16, 2023. The matters described in the original description and the claims of the application are incorporated by reference into the present application.

### [INDUSTRIAL APPLICABILITY]

According to the present invention, there is provided a plant treatment method, which can easily increase a production amount.

## Claims

1. A plant treatment method, comprising treating a propagule of a plant with an active component which is a compound represented by Formula (I) below or a tautomer thereof, or an agronomically acceptable salt thereof: 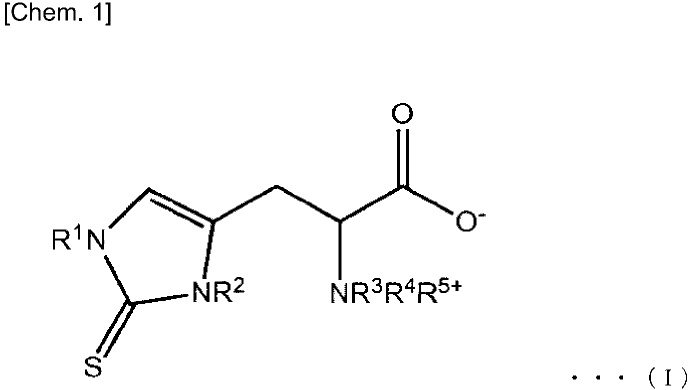 where in Formula (I), R¹ and R² each independently represent a hydrogen atom or an alkyl group having from 1 to 4 carbons, and R³, R⁴, and R⁵ each independently represent an alkyl group having from 1 to 4 carbons.

2. The plant treatment method according to claim 1, wherein
the active component is a growth promoter.

3. The plant treatment method according to claim 1 or 2, whereinan amount of the active component applied is 0.005 µg or more and 10 mg or less per 0.1 g of the propagule.

4. The plant treatment method according to any one of claims 1 to 3, wherein
in the treatment, the propagule is brought into contact with a treatment agent containing the active component.

5. The plant treatment method according to any one of claims 1 to 4, wherein the treatment is performed before plant cultivation is started.

6. A formulation for plant propagule treatment, the formulation comprising:
a liquid carrier; and
an active component which is a compound represented by Formula (I) below or a tautomer thereof, or an agronomically acceptable salt thereof: 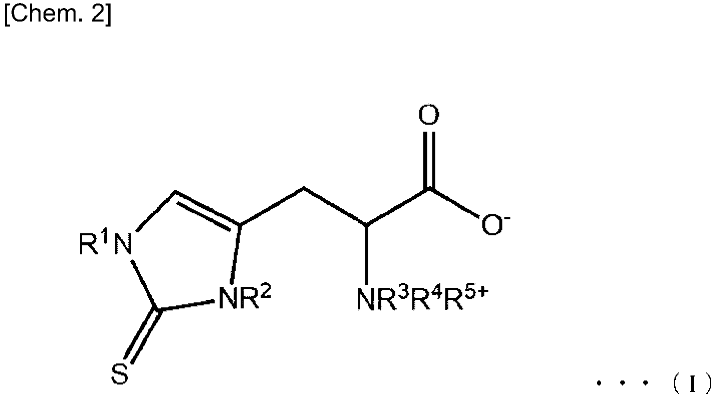
where in Formula (I), R¹ and R² each independently represent a hydrogen atom or an alkyl group having from 1 to 4 carbons, and R³, R⁴, and R⁵ each independently represent an alkyl group having from 1 to 4 carbons.

7. The formulation for plant propagule treatment according to claim 6, wherein the active component is a growth promoter.

8. A propagule of a plant, the propagule comprising an active component which is a compound represented by Formula (I) below or a tautomer thereof, or an agronomically acceptable salt thereof: 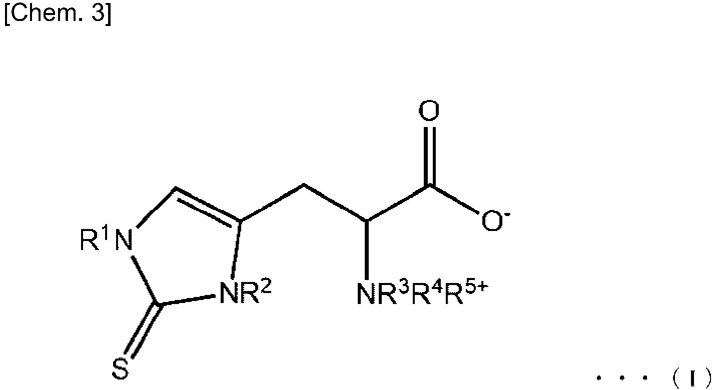 where in Formula (I), R¹ and R² each independently represent a hydrogen atom or an alkyl group having from 1 to 4 carbons, and R³, R⁴, and R⁵ each independently represent an alkyl group having from 1 to 4 carbons.

9. The propagule of a plant according to claim 8, wherein
the active component is a growth promoter.

10. The propagule of a plant according to claim 8 or 9, wherein
the active component is deposited onto a surface of the propagule.

11. A method for growing a plant, the method comprising
sprouting a propagule of a plant, wherein
the propagule contains an active component which is a compound represented by Formula (I) below or a tautomer thereof, or an agronomically acceptable salt thereof: 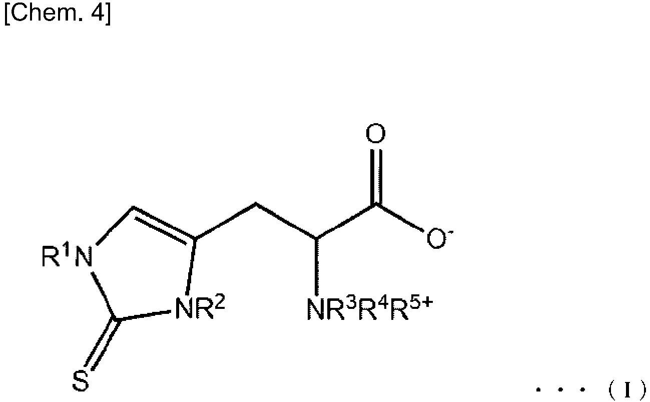
where in Formula (I), R¹ and R² each independently represent a hydrogen atom or an alkyl group having from 1 to 4 carbons, and R³, R⁴, and R⁵ each independently represent an alkyl group having from 1 to 4 carbons.

12. The method for growing a plant according to claim 11, wherein
the active component is a growth promoter.

13. The method for growing a plant according to claim 11 or 12, the method comprising, prior to the sprouting,
treating the propagule with the active component.

14. A transplanted seedling grown by the growing method described in any one of claims 11 to 13.
